(19) Europäisches Patentamt
European Patent Office
Office européen des brevets

(11) **EP 2 695 114 B1**

(12) **EUROPEAN PATENT SPECIFICATION**

(45) Date of publication and mention
of the grant of the patent:
**06.09.2017 Bulletin 2017/36**

(51) Int Cl.:
*E21B 34/02* *(2006.01)*    *E21B 34/04* *(2006.01)*
*E21B 34/16* *(2006.01)*    *E21B 41/00* *(2006.01)*
*G06Q 10/06* *(2012.01)*    *G06Q 40/08* *(2012.01)*
*F16K 37/00* *(2006.01)*

(21) Application number: **12767768.0**

(22) Date of filing: **30.03.2012**

(86) International application number:
**PCT/NO2012/000032**

(87) International publication number:
**WO 2012/138228 (11.10.2012 Gazette 2012/41)**

(54) **INSTRUMENTATION SYSTEM FOR DETERMINING RISK FACTORS**

GERÄTESYSTEM ZUR BESTIMMUNG VON RISIKOFAKTOREN

SYSTÈME D'INSTRUMENTATION POUR DÉTERMINER DES FACTEURS DE RISQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.04.2011 NO 20110531**

(43) Date of publication of application:
**12.02.2014 Bulletin 2014/07**

(73) Proprietor: **Solberg & Andersen AS
5132 Nyborg (NO)**

(72) Inventors:
• **JEEVES, Simon
N-5104 Widsvåg (NO)**
• **JUVIK, Tore
N-5105 Eidsvåg (NO)**

(74) Representative: **Øvsttun, Trond
ACAPO AS
Postboks 1880 Nordnes
5817 Bergen (NO)**

(56) References cited:
EP-A1- 1 070 573      EP-A1- 1 393 136
WO-A1-2010/039804    US-A- 3 865 142
US-A- 3 875 995      US-A- 4 879 901
US-A- 5 549 137      US-A- 6 128 946
US-A1- 2009 204 232    US-A1- 2010 153 146
US-A1- 2010 300 696    US-B2- 6 976 503

• **JUVIK T ET AL: "ONLINE VALVE MONITORING SYSTEMS USED ON OFF-SHORE PLATFORMS IN THE NORTH SEA", PROCEEDINGS OF THE INTERNATIONAL CONFERENCE ON OFFSHORE MECHANICS AND ARCTIC ENGINEERING, XX, XX, 23 June 2002 (2002-06-23), pages 1-05, XP008046471,**
• **SELVIK J T ET AL.: 'A framework for reliability and risk centered maintenance.' RELIABILITY ENGINEERING AND SYSTEM SAFETY vol. 96, 11 August 2010, pages 324 - 331, XP027516941**

**Description**

**Technical field of invention**

The present invention relates to instrumentation systems for determining risk factors, for example to instrumentation systems for determining risk factors associated with apparatus including one or more valves, for example "X-mas tree" (Christmas tree) apparatus including master valves employed to cap oil and gas bore holes. Moreover, the present invention relates to methods of employing instrumentation systems for determining risk factor, for methods of employing instrumentation systems for determining risk factors associated with apparatus including one or more valves, for example "X-mas tree" (Christmas tree) apparatus including master valves employed to cap oil and gas bore holes. The apparatus is optionally concerned with oil and/or gas production, although the apparatus is susceptible to being employed in other applications not related to oil and/or gas discovery and/or production.

**Background to the invention**

In many contemporary installations, for example oil and/or gas production facilities, in nuclear reactors, in chemicals processing plants, there are critical components whose failure potentially results in devastating consequences. A major oil disaster in the Gulf of Mexico in the year 2010 ("Deep Water Horizon") is an example of potential damage which occurs when critical components fail. Moreover, later problems at atomic reactors at Fukushima, Japan in the year 2011 illustrate an importance that critical safety systems are able to function when required in an emergency, namely to provide interim cooling to atomic reactors which have been shut down but have not yet cooled down. In all of these installations, there are fluid flows which are controlled via control valves, for example via so-called "butterfly valves", pin-and-seat valves and so forth.

When operating installations whose failure could unleash colossal damage, operators are obliged to seek insurance to address damage costs in an event of a major accident occurring. Companies such as Veritas AS specialize in providing insurance for major technical projects, for example for off-shore oil and/or gas installations, for civil engineering products such as bridge construction, as well as shipping and off-shore wind turbines. Often, a grant of insurance requires operators of installations to have taken adequate measures to reduce a risk of a potential accident from arising. Such adequate measures includes, for example, selection of suitable components and materials, inclusion of safety backup systems for coping in an event of an emergency arising, and monitoring systems for monitoring physical conditions within an installation.

A problem arising in practice with complex installations is that it is often difficult to determine an instantaneous risk factor which is potentially temporally dynamically varying depending on operating status of the installations. Determination of the risk factor, namely an indication of probability of failure of the installations, is often devolved to experienced personnel, for example engineers, who have personal experience with technologies employed within the installations.

In a United States granted patent no. US 3 865 142 ("Electrical remote control system for underwater wells", Begun *et al.,* FMC Corp., California, USA), there is described a fail-safe electrical system for controlling, from a remote location, operation of hydraulic, pneumatic and/or electrically powered mechanisms, for measuring pressures, temperatures and any other parameter transduceable to an electrical parameter and indicative of corresponding values thereof on a display panel at the remote location. As employed with valves and pressures at an underwater oil, gas, or other fuel well, the system comprises a control station at a suitable surface location, an underwater or sub-sea station adjacent to the well, a single electrical cable interconnecting the two stations, and additional single electrical cables from the sub-sea station to each of the valves to be operated and to each of the pressure locations to be monitored. Where valves, chokes, or other elements of the well are hydraulically or pneumatically powered, the system employs solenoid valves beneficially positioned in the sub-sea station to control the hydraulic or pneumatic pressures delivered to the elements. Where the valves are electrically powered, they are controlled by suitable relays in their electric circuit. A specific system for controlling operation of nine valves and for monitoring five pressures at a well's "X-mas tree" assembly (Christmas tree) is described, as also is a system for implementing procedures on a plurality of wells from a single control station.

A system and method for improved coordination between control and safety systems is disclosed in WO2010/039804A1, and comprises a plurality of field devices provided in a safety subsystem and a control subsystem, for monitoring one or more valves in an array. WO2005/059294A2 discloses a method for reducing consequences and risks of failure in a hydrocarbon pipeline system, and is a pipeline management system.

Selvik J.T, et. al; A framework for reliability and risk centered maintenance; in: Reliability Engineering and System Safety, p. 324 - 331, disclose an analysis method for preventive maintenance planning by considering risk as the reference for the analysis in addition to reliability. A broad perspective on risk is adopted where uncertainties are the main component of risk in addition to possible events and associated consequences. A case from the offshore oil and gas industry is presented to illustrate and discuss the suggested approach.

US 2010/153146 A1 disclose a computer implemented method, apparatus, and computer program product for generating general risk scores for general risk cohorts. Digital sensor data associated with a general risk cohort is received from a set of multimodal sensors. The digital sensor data comprises metadata describing attributes associated with at least one member of the general risk cohort. Each member of the general risk cohort comprises data describing objects belonging to a category. A general risk score for the general risk cohort is generated based on selected risk factors and the attributes associated with the at least one member of the general risk cohort. In response to a determination that the general risk score exceeds a risk threshold, a response action is initiated.

US 2010/300696 A1 disclose a method that facilitates collection of information on desired production related parameters in a subsea valve system. Collected data can be processed in a manner that enables enhanced production and/or an increased knowledge regarding operation of the entire subsea valve system. Sensors are coupled with a plurality of subsea valves, and those subsea valves are positioned at appropriate locations along a subsea hydrocarbon production system. The sensors also may be coupled with a data processing system to process the collected data for use by a well operator.

**Summary of the invention**

The present invention seeks to provide an instrumentation system for determining one or more risk factors pertaining to an assembly including one or more valves provided with one or more sensors for sensing operation of the one or more valves.

Moreover, the present invention seeks to provide a method of determining one or more risk factors pertaining to the aforesaid assembly.

According to a first aspect of the invention, there is provided an instrumentation system for monitoring one or more valves of a sub-sea Xmas-tree in an oil and/or gas production assembly, wherein said system includes one or more sensors coupled to said one or more valves, and a data processing arrangement for processing sensor signals generated by said one or more sensors to provide an indication of operation of said one or more valves, characterized in that

each valve includes a corresponding adjustable flow controlling element, and an actuator arrangement for actuating said flow controlling element, and

said one or more sensors are operable to sense:

1) a torque generated by said actuator arrangement when actuating said element, and
2) a dynamic pressure difference across said element; a cavity pressure indicative of leakage of one or more seals of said element; and a pressure of actuating fluid supplied to said actuator arrangement.

wherein said data processing arrangement are operable to compute one or more risk factors (R), based on the sensor signals from said one or more sensors of the measured torque 1) and pressures 2) in the valves of the sub-sea Xmas-tree, and compared against one or more threshold levels or values, which is indicative of operating reliability and/or safety of the valves.

The invention is of advantage in that computation of the one or more risk factors (R) enables more reliable and/or safer operation of the one or more valves to be achieved in operation.

Optionally, the instrumentation system is implemented such that the one or more sensors and a communication arrangement coupling the one or more sensors to the data processing arrangement are arranged to be constructed to an intrinsically safe standard.

Optionally, the instrumentation system is implemented such that the data processing arrangement is operable to compute the one or more risk factors (R) taking into account at least flow characteristics of a flow of fluid through the one or more valves as sensed by the one or more sensors.

According to a second aspect of the invention, there is provided a method of employing an instrumentation system for monitoring one or more valves of a subsea Xmas-tree in an oil and/or gas production assembly, characterized in that said method includes:

(a) including one or more sensors coupled to said one or more valves of the subsea Xmas-tree, and a data processing arrangement for processing sensor signals generated by said one or more sensors; and
(b) sensing using said one or more sensors in respect of each valve for a corresponding adjustable flow controlling element, and an actuator arrangement for actuating said flow controlling element, the following parameters:

1) a torque generated by said actuator arrangement when actuating said element, and
2) a dynamic pressure difference across said element; a cavity pressure indicative of leakage of one or more seals of said element; and a pressure of actuating fluid supplied to said actuator arrangement,

(c) using said data processing arrangement for processing the measured torque 1) and pressures 2) in the valves of the sub-sea Xmas-tree generated in operation by said one or more sensors and to compare against one or more threshold levels or values, to compute one or more risk factors (R) indicative of operating reliability and/or safety of said one or more valves.

According to a third aspect of the invention, there is provided an assembly including one or more valves for controlling fluid flow within the assembly, characterized in that the assembly includes an instrumentation system pursuant to the first aspect of the invention.

Features of the invention are susceptible to being combined in various combinations without departing from the scope of the invention as defined by the claims.

## Description of the diagrams

Embodiments of the invention will now be described, by way of example only, with reference to the following diagrams wherein:

FIG. 1    is an illustration of a complex installation including one or more valves whose reliable operation is critical to the installation;

FIG. 2    is an illustration of an instrumentation system pursuant to the present invention;

FIG. 3    is an illustration of a contemporary ValveWatch system adapted pursuant to the present invention; and

FIG.4    is an alternative illustration of an instrumentation system pursuant to the present invention.

## Description of embodiments of the invention

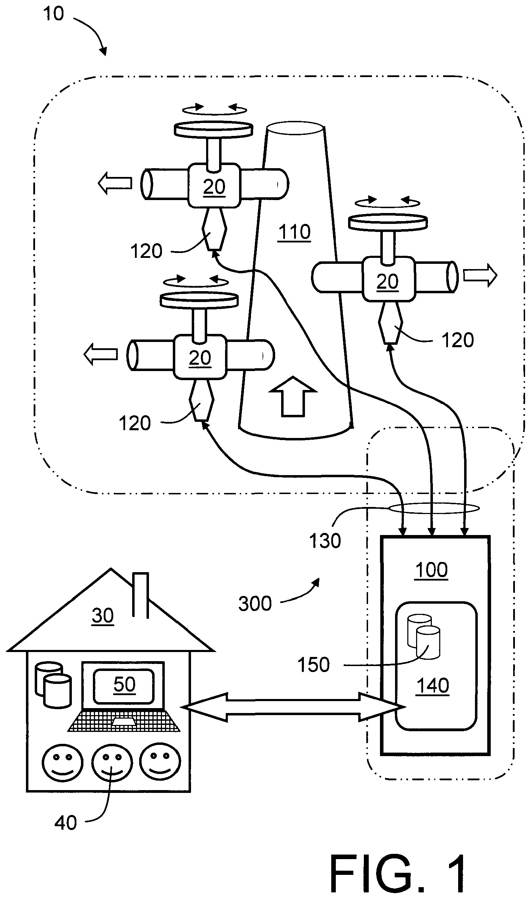

Assemblies including one or more valves are contemporarily employed in various installations which are safety critical, namely where valve failure may potentially have serious consequences. The one or more valves are provided with one or more corresponding actuators, and are operable to provide a controllable degree of resistance to fluid flow therethrough, for example in closed, open or partially-open states. Pursuant to the present invention, information indicative of a condition of the one or more valves and their one or more actuators is beneficially derived both from a finally actuated state thereof and also from their characteristics whilst they are being actuated. In an example complex installation indicated generally by **10** in FIG. 1, there are a plurality of valves **20,** wherein failure of merely one of the valves **20** is potentially susceptible to cause serious operating problems. In a central control room **30** of the complex installation **10,** to assist to avoid a potential information overload of operators **40,** a computer system **50** of the control room **30** is operable to aggregate data received at the control room **30** in order to present to the operators **40** an overall indication of a real-time state of the installation **10.** The operators **40** often do not have time to monitor operation of each individual valve **20** of the installation **10** in detail, for example to observe each every nuance of valve **20** operation. If the aggregation is not executed in a flexible and transparent manner, a risk potentially arises as occurred at the Harrisburg "Three Mile Island" nuclear disaster, wherein the operators **40** are blocked by the layers of software from appreciating what is really happening in respect of individual valves **20** which may have a critical function within the installation **10.**

The installation **10** is, for example, an oil and/or gas production installation, a nuclear power station, a chemical manufacturing facility, a water works, a hydroelectric power facility, a wind turbine array, although the present invention is also applicable to other types of complex installation. Although the one or more valves **20** are mentioned in the foregoing, the invention is optionally also pertinent to other types of actuated assemblies, for example nuclear fuel rod handling equipment. Optionally, for example, the one or more valves **20** are associated with a "X-mas tree" (Christmas tree) assembly often employed in sub-sea locations to cap casing pipes leading to subterranean oil and/gas reservoirs, for example defined within geological anticlines. An example of a "X-mas tree" (Christmas tree) assembly is described in the aforementioned patent no. US 3 865 142.

The present invention is concerned with an instrumentation system **100** for determining risk factors associated with configurations of the one or more valves **20,** for example as illustrated in FIG. 1. The one or more valves **20** are associated with an assembly **110,** for example a sub-sea "X-mas tree" assembly. The instrumentation system **100** includes one or more sensors **120** for measuring at the assembly **110** one or more physical parameters, for example a static pressure (i.e. "DC pressure"), a temporal variation in pressure (i.e. "AC difference"), a temperature, a flow rate, a relative position of a component or element and so forth. The instrumentation system **100** further includes a communication arrangement **130** for communicating signals generated by the one or more sensors **120** to a data processing arrangement **140.** The data processing arrangement **140** is optionally remote from the assembly **110.** Alternatively, the data processing arrangement **140** is optionally spatially local to the assembly **110.** Yet alternatively, the data processing arrangement **140** is implemented at several spatial locations, for example partially local to the assembly **110,** and partially spatially remote therefrom.

The data processing arrangement **140** is arranged to execute one or more software products **150** which are operable to receive sensed information regarding movement of one or more valve **20** of the assembly **110** and/or one or more actuators thereof, for example movement of valve **20** components, changes in pressure, changes in pressure variations, fluid flow rates and so forth. The sensed information is generated by the one or more sensors **120** associated with the one or more valve **20** and/or their corresponding one or more actuators. The one or more software products **150** are operable to process the sensed information according to a set of rules, which in conglomerate define a method, from which one or more risk factors are calculated. The one or more risk factors are beneficially, for example, brought to the attention of one or more operators **40** in a situation where the one or more computed risk factors exceed one or more corresponding threshold values or levels. Optionally, the one or more threshold values or levels are dynamically changed in response to a type of mode of operation of the valves **20,** for example when required to control of flow of different types of fluid on different occasions with mutually different degrees of hazard associated therewith. Optionally, the one or more threshold values are defined by insurance organizations, for example Veritas AS. Optionally, the one or more threshold values or levels are dynamically changed to account for corrosion and/or ageing characteristics of the one or more valves **20** being monitored by the one or more software products; for example an old worn out and/or corroded valve **20** is more likely to fail than a newly installed pristine quality-certified valve **20**. Optionally, the aforesaid set of rules are part of a parametric model of the one or more valves **20** wherein sensed signals from the one or more valves **20** and/or their one or more actuators are input parameters to the parametric model, the outputs from the parametric model are employed to compute one or more risk factors which are compared against one or more threshold levels or values for providing various degrees of risk operating warnings from the one or more software products **150** to the operators **40**. Optionally, the parametric model is arranged to change dynamically in response to input signals provided thereto, for example for modeling valve abrasion, corrosion and ageing.

Applicant (Solberg & Andersen AS) is a manufacturer of monitoring systems for valves, for example a proprietary ValveWatch™ system. The ValveWatch ™ system is operable to perform leak and condition monitoring of critical ON/OFF valves, for example ESD/ESV-type valves. The ValveWatch ™ system is beneficially employed for implementing embodiments of the present invention.

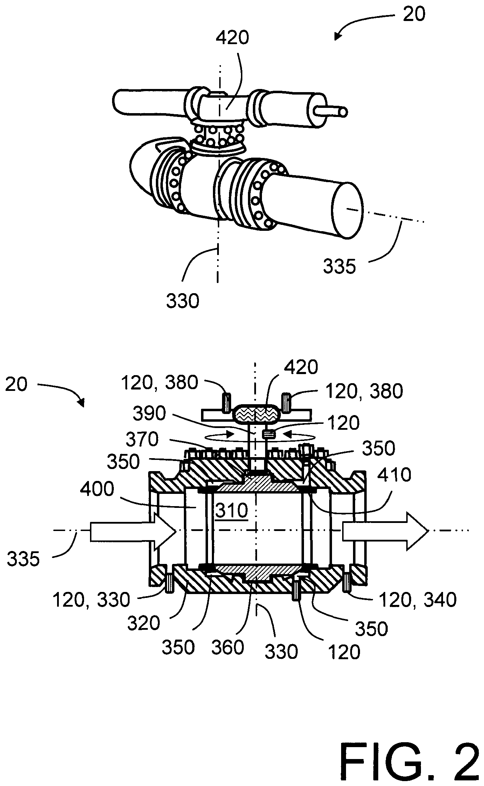

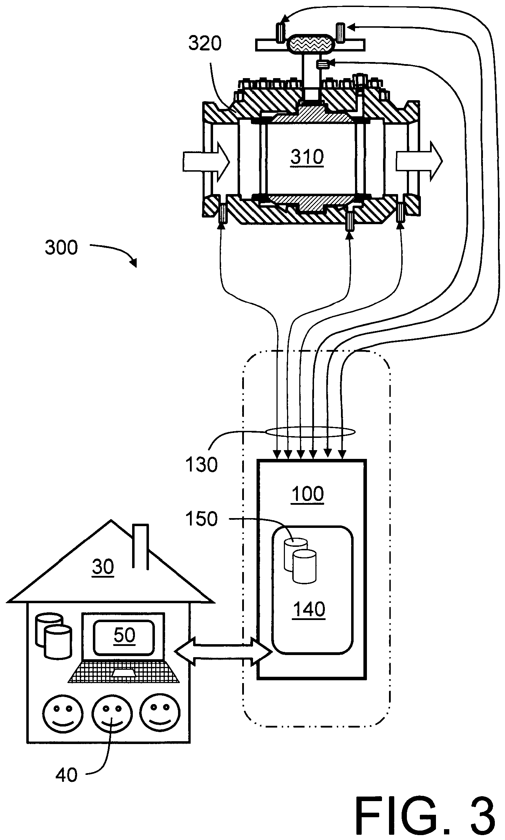

An example of use of the ValveWatch system **300** is illustrated in FIG. 2 and FIG. 3, namely suitable for use with the aforementioned valve **20**. In an example, the valve **20** includes a rotatable element **310** mounted within a tube component **320**. Rotation of the element **310** about an axis **330,** which is orthogonal to an elongate axis **335** of the tube component **320,** is operable to control a flow of a fluid along the tube component **320**. Upstream and downstream of the element **310,** there are included two dynamic pressure sensors **330, 340** mounted into holes provided on the tube component **320** as illustrated; the dynamic pressure sensors **330, 340** are operable to provide signals representative of temporal pressure variations, namely "AC coupled" pressure measurement signal. Moreover, the tube component **320** includes a cavity **350** around upper and lower regions whereat the element **310** is rotatable mounted about pivot points **360, 370**. The cavity **350** is provided with a pressure sensor **380** as illustrated. Optionally, the tube component **320** is also provided with a strain gauge sensor mounted onto an outer circumferential surface of a yoke **390**; the yoke **390** is operable to convey torsional force required for rotating the element **310** for opening or closing the valve **20**. For substantially sealing the cavity **350** in respect of an inner region **400** of the tube component **320,** the element **310** is provided with an annular seal **410**. In operation, the element **310** is rotated by a rotary actuator **420** coupled via the yoke **390** to the element **310** as illustrated. The yoke **390** is conveniently implemented as a shaft having a substantially circular cross-section. Optionally, the actuator **420** is provided with two static pressure sensors **380** for measuring a pressure of actuating fluid supplied to the actuator **420**; in other words, the two static pressure sensors **380** are operable to measure static constant pressures, namely "DC coupled" pressure signals. The dynamic pressure sensors **330, 340** are employed to monitor any increase in leakage through the valve **20**; moreover, the static pressure sensors **380** of the actuator **420,** and the strain gauge mounted to the yoke **390** are employed to monitor an overall operating condition of the valve **20**; for example, damage or corrosion to the element **310** or any component parts to which it abuts is potentially sensed by an increase in actuator fluid pressure and/or torque at the yoke **390** necessary to change a state of the valve **20,** for example when being actuated between open and closed states. The strain gauge mounted to the yoke **390** is beneficially implemented in a full Wheatstone bridge configuration, such that the strain gauge not only measures torque, but also strain in at least two Cartesian directions, for example in mutually orthogonal X and Y directions; in other words, the strain sensor is beneficially operable to measure torque, thrust, sheering and torsional forces in respect of the yoke **390**.

For purposes of detecting leakage through the valve **20,** two principal types of sensor technology are susceptible to being employed: dynamic pressure sensors, acoustic sensors. Beneficially, both types of technology are employed for implementing the present invention. The types of technology include piezo-electric pressure sensors for example.

Thus, in overview, the system **300,** for example implemented in a context of a proprietary "ValveWatch™ system", incorporates sensors attached onto the valve **20** and to the actuator **420** to monitor and record their performance in a routine manner. Optionally, the system **300** is operable to operate the valve **20** periodically to characterize its operating performance. The strain sensor and the actuator pressure sensors monitor a performance of the valve **20** and its actuator **420** during operation; dynamic pressure sensors and acoustic sensors monitor the valve **20** for internal seal seat leaks, for potential leaks and for potential snagging or binding. In synergistic combination, these aforementioned sensors provide, via the data processing arrangement **140,** the operators **40** with an automated checkup on a real-time condition of the valve **20** and its associated actuator **420,** for example by providing one or more computed risk factors pertaining to the valve **20,** wherein the risk factors are indicative of likely probability of operating failure or complications which are likely to arise in respect of the valve **20**. The one or more computed risk factors have an advantage in that they can be rapidly appreciated by the operators **40** and their significance rapidly assessed. Optionally, the one or more risk factors can be used to trigger automatically emergency safety procedures and/or maintenance procedures.

The strain gauge sensor and the actuator pressure sensors provide valuable diagnostic data each time the valve **20** strokes, namely changes between its open and closed states wherein the element **310** is rotated by action of the actuator **420**. The strain gauge sensor is permanently bonded to the yoke **390** and is used for monitoring at least a torque applied to the element **310** during a stroke of the valve **20**. Technical problems with operation of the valve **20,** including damage to certain components thereof, are readily detectable from signals generated by the strain gauge sensor.

The pressure sensors **380** mounted to supply lines to the actuator **420** assist to enable recording in changes in actuator **420** pressure through a stroke of the valve **20**. Damage to the actuator **420** or a problem with air or hydraulic supply to the actuator **420** is susceptible to being detected using these pressure sensors **380**. The pressures sensors **380** mounted to the actuator **420** are also used to monitor when the element **310** of the valve **20** changes position, for example by way of detecting a momentary reduction in hydraulic fluid pressure as the actuator **420** executes its stroke; beneficially, the system **300** is optionally operable to implement a valve stroke test in an event of a problem being identified, for further valve **20** characterization tests.

The data processing arrangement **140** optionally includes a local data acquisition unit (LDAU) assembly which includes a proprietary IP66 weather-proof box housing, and a plurality of modules installed spatially as closely as practically feasible to the valve **20**. The modules optionally include two strain/AC modules and a communications module. The communication module is operable to support communication via strain channels for use in monitoring signals from the strain gauge associated with the yoke **390** and from the static pressure sensors **380** associated with the actuator **420**. Moreover, the communication module is operable to provide AC channels for handling signals generated by the dynamic pressure sensors **330, 340**. The data processing arrangement **140** is operable to condition and to convert signals received from the sensors **120, 330, 340, 380** to a digital format for subsequent communication via the communication module for wireless or data-over-power transmission to a HUB assembly. The LDAU assembly and the sensors **120, 330, 340, 380** are beneficially implemented in an intrinsically safe manner so that their operation is not capable of initiating any form of fire or explosion at the valve **20**, even in an event of a leakage of flammable fluids externally from the valve **20**; beneficially, the LDAU assembly and the sensors are certified according to North American and European standards for installation in Zone 0 areas.

Beneficially, additional communications apparatus and an Ethernet module are included in the HUB assembly together with all power supplies, terminal strips and intrinsic safety barriers. Beneficially, the HUB assembly is rack-mounted in a safe area with Zone 2 designation or equivalent room. Optionally, each HUB assembly is susceptible to being configured to monitor up to eight valves **20**. Conveniently, an Ethernet cable connects the HUB assembly to a sever whereat sensor data is stored, transmitted and then analyzed for leakage, for example in connection with computing one or more risk factors. Optionally, all test results from the one or more valves **20** are stored in a secure Oracle database application support by the data processing arrangement **140.**

Beneficially, for remote monitoring of risk factors and operation of valves **20,** the system **300** includes a simple Internet web interface for allowing easy access to the system **300** for monitoring its status from any location wherein Internet access is available. Beneficially, security, for example via encryption, is provided so that only authorized personnel are able to access the system **300,** for example for viewing its system map, alarm window and system tree to view valve **20** status as well a one or more computed risk factors. The one or more software products **150** executed by the data processing arrangement **140** are operable when executed upon computing hardware to generate reports and trend plots so that the operators **40** are able to evaluate valve **20** performance and one or more risk factors associated with the one or more valves **20.**

In the foregoing, it is elucidated that the data processing arrangement **140** is operable to compute one or more risk factors in relation to the valve **20** of the system **300**. Computed safety factors provided in respect of the system **300** are capable of providing increased operating safety and thereby more reliable production, for example where the valve **20** associated with the system **300** is a part of a "X-mas tree" assembly for oil and/or gas industries, for example sub-sea "X-mas tree" assemblies. Computation of the one or more risk factors is capable of reducing "down" time and therefore providing enhanced profitability. The invention is thus concerned with an instrumentation system **300** which is operable to monitor continuously one or more risk factors associated with a valve **20**, for example implemented as a wing-valve, for example for oil and/or gas platform operators.

The one or more risk factors are susceptible to being computed in different ways, but beneficially follow a general from as defined in Equation 1 (Eq. 1):

$$R = F(S, p_{1...n})$$  Eq. 1

wherein

$R =$  one or more risk factors;
$F =$  a mathematical function;
$S =$  a strain gauge measurement; and
$p =$  one or more pressure measurements from pressure sensor 1 to $n$ associated with the valve **20**.

An example of the function $F$ will now be elucidated for illustrating a specific manner of implementing the present invention, although alternative manners of computing the one or more risk factors are within the scope of the present invention. As elucidated in the foregoing, the function $F$ is optionally based upon a parametric simulation model of the valve **20**.

In a first step of the computation of the risk factor $R$, a closing force $C_f$ is computed pursuant to Equation 2 (Eq. 2):

$$C_f = S_f + B_f$$  Eq. 2

wherein

$B_f =$  a "blow out" force for the element **310** of the valve **20**;
$S_f =$  a spring force associated with the element **310** of the valve **20**.

In a second step of the computation of the risk factor $R$, an opposing force $O_f$ from the actuator **420** is computed pursuant to Equation 3 (Eq. 3):

$$O_f = H_p \times A_p$$  Eq. 3

wherein

$H_p =$  a hydraulic pressure applied to a piston of the actuator **420**; and
$A_p =$  an area of the piston subjected to the hydraulic pressure $H_p$.

In a third step of the computation of the risk factor $R$, a friction $M$ of the element **310** of the valve 20 is computed pursuant to Equation 4 (Eq. 4):

$$M = C_f - O_f$$  Eq. 4

In a fourth step of the computation of the risk factor $R$, a computation pursuant to Equation 5 (Eq. 5) is executed:

$$R = k \times \frac{C_f}{M}$$  Eq. 5

wherein

$k =$  scaling coefficient.

Although the present invention is described in the foregoing in respect of wing and master valves **20**, namely including the element **310** arranged to perform a translation movement rather than a rotational movement to control a flow of fluid through the valve **20**, the invention can be extended to pertain to ESD/ESV valves. Beneficially, the computation of the risk factor $R$ pursuant to Equation 1 (Eq.1) takes into account a temperature $T$ of the valve **20**, and also flow properties Q of the valve **20**, namely pursuant to Equation 6 (Eq. 6):

$$R = F\left(S, p_{1\ldots n}, T, Q\right) \qquad \text{Eq. 6}$$

The valve **20** is beneficially furnished with a temperature sensor for providing in operation a measure of temperature of the valve **20,** the measure being used for use when risk factors are being calculated for the valve **20.**

By the operators **40** monitoring the one or more risk factors $R$, appropriate safety, repair and/or maintenance routine are beneficially implemented, therefore avoiding potential accident or unreliability. When the valve **20** is a critical component in an installation, the present invention is capable of potentially avoiding major incidents and disasters which can be highly expensing to rectify retrospectively. Thus, the present invention is capable of providing considerable operating benefits at installations.

Optionally, the aforementioned valves **20** are either of a rotary actuated type or a linear displacement actuated type as aforementioned. Although embodiments of the invention are described in respect of valves coupled to fluid-actuated actuators, the invention is susceptible to being applied to electrically-powered actuators wherein current and voltage energization to the electrically-powered actuators are monitored for purposes of computing the one or more risk factors ($R$). Optionally, actuating fluid of the actuators **420** are provided via electrically-energized fluid-control solenoid valves, wherein the solenoid valves are also provided with sensors, for example current sensors and armature movement sensors, for detecting that the solenoid valves are also working reliably and for computing one or more risk factors associated therewith. Failure of the solenoid valve feeding the actuator **420** can, from a system point of view, be a disastrous as failure of the actuator **420** itself. For example, when assessing a risk factor $R$ associated with the solenoid, an actuating speed and actuating electrical current required to operate the solenoid is monitored.

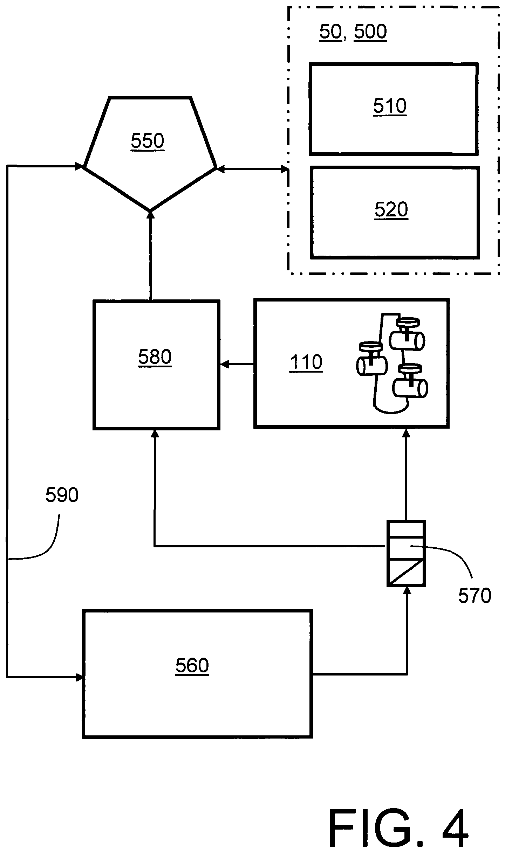

Referring to FIG. 4, there is shown a representation of instrumentation system pursuant to the present invention. The assembly **110** is shown including one or more valves **20** which are operated by one or more solenoids **570**. From the assembly **110,** sensors **120, 330, 340, 380** provide valve **20** sensor data **580** which is provided to a proprietary "Safety factor" system **550** which is operable to perform data processing on the sensor data **580**. Processed data from the system **550** is conveyed to a SAS control system **560** via a data tunneler **590**. Outputs from the SAS control system **560** are employed to control the aforesaid one or more solenoids **570.** As aforementioned, operation of the solenoid **570** is beneficially is also beneficially monitored to contribute relevant data to the sensor data **580.**

The present invention is especially suitable for a Topside Christmas tree system, either sub-sea based or land-based. However, as elucidated in the foregoing, the present invention is susceptible to being employed in other types of systems.

Modifications to embodiments of the invention described in the foregoing are possible without departing from the scope of the invention as defined by the accompanying claims. Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural. Numerals included within parentheses in the accompanying claims are intended to assist understanding of the claims and should not be construed in any way to limit subject matter claimed by these claims.

**Claims**

1. An instrumentation system (300) for monitoring one or more valves (20) of a sub-sea Xmas-tree in an oil and/or gas production assembly (110), wherein said system (300) includes one or more sensors (120) coupled to said one or more valves (20), and a data processing arrangement (140) for processing sensor signals generated by said one or more sensors (120) to provide an indication of operation of said one or more valves (20), wherein each valve (20) includes a corresponding adjustable flow controlling element (310), and an actuator arrangement (420) for actuating said flow controlling element (310), and **characterised in that**: said one or more sensors (120) are operable to sense:

   1) a torque generated by said actuator arrangement (420) when actuating said element (310), and
   2) a dynamic pressure difference across said element (310); a cavity (350) pressure indicative of leakage of one or more seals of said element (310); and a pressure of actuating fluid supplied to said actuator arrangement (420),

   wherein said data processing arrangement (140) are operable to compute one or more risk factors ($R$), based on the sensor signals from said one or more sensors (120) of the measured torque 1) and pressures 2) in the valves (20) of the sub-sea Xmas-tree, and compared against one or more threshold levels or values, which is indicative of operating reliability and/or safety of the valves (20).

2. An instrumentation system (300) as claimed in claim 1, **characterized in that** said one or more sensors (120) and a communication arrangement (130) coupling said one or more sensors (120) to said data processing arrangement (140) are arranged to be constructed to an intrinsically safe standard.

3. An instrumentation system (300) as claimed in claim 1, **characterized in that** the data processing arrangement (140) is operable to compute said one or more risk factors (R) taking into account at least flow characteristics of a flow of fluid through said one or more valves (20) as sensed by said one or more sensors (120).

4. An assembly (110) including one or more valves (20) for controlling fluid flow within said assembly (110), **characterized in that** said assembly includes an instrumentation system (300) as claimed in claim 1.

5. A method of employing an instrumentation system (300) for monitoring one or more valves (20) of a subsea Xmas-tree in an oil and/or gas production assembly (110), wherein the method comprises:

(a) including one or more sensors (120) coupled to said one or more valves (20) of the subsea Xmas-tree, and a data processing arrangement (140) for processing sensor signals generated by said one or more sensors (120); and **characterised by**:
(b) sensing using said one or more sensors (120) in respect of each valve (20) for a corresponding adjustable flow controlling element (310), and an actuator arrangement (420) for actuating said flow controlling element (310), the following parameters:

1) a torque generated by said actuator arrangement (420) when actuating said element (310), and
2) a dynamic pressure difference across said element (310); a cavity (350) pressure indicative of leakage of one or more seals of said element (310); and a pressure of actuating fluid supplied to said actuator arrangement (420),

(c) using said data processing arrangement (140) for processing the measured torque 1) and pressures 2) in the valves (20) of the sub-sea Xmas-tree generated in operation by said one or more sensors (120) and to compare against one or more threshold levels or values, to compute one or more risk factors (R) indicative of operating reliability and/or safety of said one or more valves (20).

**Patentansprüche**

1. Gerätesystem (300) zum Überwachen eines oder mehrerer Ventile (20) eines unterseeischen Eruptionskreuzes in einem Öl- und/oder Gasproduktionsaggregat (110), wobei das System (300) einen oder mehrere Sensoren (120) enthält, die mit dem einen oder mehreren Ventilen (20) gekoppelt sind, und eine Datenverarbeitungsanordnung (140) zum Verarbeiten von Sensorsignalen, die durch den einen oder mehrere Sensoren (120) erzeugt werden, um eine Betriebsanzeige des einen oder mehrerer Ventile (20) zu liefern, wobei jedes Ventil (20) ein entsprechendes einstellbares Stromsteuerelement (310) und eine Betätigungsanordnung (420) zum Betätigen des Stromsteuerelements (310) enthält, und **dadurch gekennzeichnet, dass** der eine oder mehrere Sensoren (120) betreibbar ist, um zu erfassen:

1) ein Drehmoment, das durch die Betätigungsanordnung (420) erzeugt wird, wenn sie das Element (310) betätigt, und
2) eine dynamische Druckdifferenz über das Element (310); einen Druck in einem Hohlraum (350), der eine Leckage einer oder mehrerer Dichtungen des Elements (310) anzeigt; und einen Druck, um ein Fluid in Bewegung setzen, das der Betätigungsanordnung (420) zugeführt wird,

wobei die Datenverarbeitungsanordnung (140) betreibbar ist, um einen oder mehrere Risikofaktoren (R) zu berechnen, die auf den Sensorsignalen von dem einen oder mehreren Sensoren (120) des gemessenen Drehmoments 1) und der Drücke 2) in den Ventilen (20) des unterseeischen Eruptionskreuzes basieren und gegen einen oder mehrere Schwellenpegel oder - werte verglichen werden, was eine Betriebszuverlässigkeit und/oder -sicherheit der Ventile (20) anzeigt.

2. Gerätesystem (300) nach Anspruch 1, **dadurch gekennzeichnet, dass** der eine oder mehrere Sensoren (120) und eine Kommunikationsanordnung (130), die den einen oder mehrere Sensoren (120) mit der Datenverarbeitungsanordnung (140) koppelt, so angeordnet sind, dass sie in einem eigensicheren Standard aufgebaut sind.

3. Gerätesystem (300) nach Anspruch 1, **dadurch gekennzeichnet, dass** die Datenverarbeitungsanordnung (140) betreibbar ist, um den einen oder mehrere Risikofaktoren (R) zu berechnen, unter Berücksichtigung von zumindest Strömungseigenschaften eines Fluidstroms durch das eine oder mehrere Ventile (20), wie sie durch den einen oder mehrere Sensoren (120) erfasst werden.

4. Aggregat (110), das ein oder mehrere Ventile (20) zum Steuern eines Fluidstroms innerhalb des Aggregats (110) enthält, **dadurch gekennzeichnet, dass** das Aggregat ein Gerätesystem (300) nach Anspruch 1 enthält.

5. Verfahren zum Verwenden eines Gerätesystems (300) zum Überwachen eines oder mehrerer Ventile (20) eines unterseeischen Eruptionskreuzes in einem Öl- und/oder Gasproduktionsaggregat (110), wobei das Verfahren umfasst:

(a) Einbeziehen eines oder mehrerer Sensoren (120), die mit dem einen oder mehreren Ventilen (20) des unterseeischen Eruptionskreuzes gekoppelt sind, und einer Datenverarbeitungsanordnung (140) zum Verarbeiten von Sensorsignalen, die durch den einen oder mehrere Sensoren (120) erzeugt werden; und

**gekennzeichnet durch**:

(b) Erfassen, unter Verwendung des einen oder mehrerer Sensoren (120) in Bezug auf jedes Ventil (20) für ein entsprechendes einstellbares Stromsteuerelement (310) und einer Betätigungsanordnung (420) zum Betätigen des Stromsteuerelements (310), der folgenden Parameter:

1) eines Drehmoments, das durch die Betätigungsanordnung (420) erzeugt wird, wenn sie das Element (310) betätigt, und
2) einer dynamischen Druckdifferenz über das Element (310); eines Drucks in einem Hohlraum (350), der eine Leckage einer oder mehrerer Dichtungen des Elements (310) anzeigt; und eines Drucks, um ein Fluid in Bewegung zu setzen, das der Betätigungsanordnung (420) zugeführt wird,

(c) Berechnen eines oder mehrerer Risikofaktoren (R), unter Verwendung der Datenverarbeitungsanordnung (140), um das gemessene Drehmoment 1) und die Drücke 2) in den Ventilen (20) des unterseeischen Eruptionskreuzes zu verarbeiten, die im Betrieb durch den einen oder mehrere Sensoren (120) erzeugt werden, und Vergleichen gegen einen oder mehrere Schwellenpegel oder -werte, die eine Betriebszuverlässigkeit und/oder - sicherheit der Ventile (20) anzeigen.

## Revendications

1. Système d'instrumentation (300) pour surveiller une ou plusieurs vannes (20) d'un arbre de Noël sous-marin dans un ensemble de production de pétrole et/ou de gaz (110), dans lequel ledit système (300) comprend un ou plusieurs capteurs (120) couplés auxdites une ou plusieurs vannes (20), et un agencement de traitement de données (140) pour traiter des signaux de capteur générés par lesdits un ou plusieurs capteurs (120) pour fournir une indication de fonctionnement desdites une ou plusieurs vannes (20), dans lequel :

chaque vanne (20) comprend un élément de commande d'écoulement ajustable (310) correspondant, et un agencement d'actionneur (420) pour actionner ledit élément de commande d'écoulement (310), et **caractérisé en ce que** :

lesdits un ou plusieurs capteurs (120) sont utilisables pour détecter :

1) un couple généré par ledit agencement d'actionneur (420) lors de l'actionnement dudit élément (310), et
2) une différence de pression dynamique sur ledit élément (310) ; une pression de cavité (350) indicative des fuites des un ou plusieurs joints d'étanchéité dudit élément (310) ;

et une pression de fluide d'actionnement alimenté audit agencement d'actionneur (420),

dans lequel ledit agencement de traitement de données (140) est utilisable pour calculer un ou plusieurs facteurs de risque (R), en fonction des signaux de capteur provenant desdits un ou plusieurs capteurs (120) du couple 1) et des pressions 2) mesurés dans les vannes (20) de l'arbre de Noël sous-marin et comparés à un ou plusieurs niveaux ou valeurs de seuil, ce qui indique la fiabilité de fonctionnement et/ou la sécurité des vannes (20).

2. Système d'instrumentation (300) selon la revendication 1, **caractérisé en ce que** lesdits un ou plusieurs capteurs (120) et un agencement de communication (130) couplant lesdits un ou plusieurs capteurs (120) audit agencement de traitement de données (140) sont agencés pour être construits selon une norme de sécurité intrinsèque.

3. Système d'instrumentation (300) selon la revendication 1, **caractérisé en ce que** l'agencement de traitement de données (140) est utilisable pour calculer lesdits un ou plusieurs facteurs de risque (R) prenant en compte au moins des caractéristiques d'écoulement d'un écoulement de fluide à travers lesdites une ou plusieurs vannes (20) lorsqu'elles sont détectées par lesdits un ou plusieurs capteurs (120).

4. Ensemble (110) comprenant une ou plusieurs vannes (20) pour commander l'écoulement de fluide à l'intérieur dudit ensemble (110), **caractérisé en ce que** ledit ensemble comprend un système d'instrumentation (300) selon la revendication 1.

5. Procédé d'utilisation d'un système d'instrumentation (300) pour surveiller une ou plusieurs vannes (20) d'un arbre de Noël sous-marin dans un ensemble de production de pétrole et/ou de gaz (110), dans lequel le procédé comprend de :

    (a) inclure un ou plusieurs capteurs (120) couplés auxdites une ou plusieurs vannes (20) de l'arbre de Noël sous-marin, et un agencement de traitement de données (140) pour traiter des signaux de capteur générés par lesdits un ou plusieurs capteurs (120) ; et **caractérisé par** l'étape suivants :
    (b) détecter, à l'aide desdits un ou plusieurs capteurs (120) par rapport à chaque vanne (20) pour un élément de commande d'écoulement ajustable (310) correspondant, et un agencement d'actionneur (420) pour actionner ledit élément de commande d'écoulement (310), les paramètres suivantes :

        1) un couple généré par ledit agencement d'actionneur (420) lors de l'actionnement dudit élément (310), et
        2) une différence de pression dynamique sur ledit élément (310) ; une pression de cavité (350) indiquant une fuite d'un ou plusieurs joints d'étanchéité dudit élément (310) ; et une pression de fluide d'actionnement alimenté audit agencement d'actionneur (420),

    (c) utiliser ledit agencement de traitement de données (140) pour traiter le couple 1) et les pressions 2) mesurés dans les vannes (20) de l'arbre de Noël sous-marin générés en fonctionnement par lesdits un ou plusieurs capteurs (120) et pour les comparer à un ou plusieurs niveaux ou valeurs de seuil, afin de calculer un ou plusieurs facteurs de risque (R) indiquant la fiabilité de fonctionnement et/ou la sécurité desdites une ou plusieurs vannes (20).

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3865142 A
- WO 2010039804 A1
- WO 2005059294 A2
- US 2010153146 A1
- US 2010300696 A1

**Non-patent literature cited in the description**

- **SELVIK J.T.** A framework for reliability and risk centered maintenance. *Reliability Engineering and System Safety,* 324-331